# EUROPÄISCHE PATENTSCHRIFT

(11) **EP 0 656 099 B1**
(45) Veröffentlichungstag und Bekanntmachung des Hinweises auf die Patenterteilung: **20.08.1997**
(21) Anmeldenummer: 93915805.1
(22) Anmeldetag: 06.07.1993
(51) Int. Cl.: F04D 19/04, F04D 29/64, F16C 39/06

(54) **VERFAHREN ZUR ÜBERPRÜFUNG DER BETRIEBSPOSITION DES ROTIERENDEN SYSTEMS EINER VAKUUMPUMPE, VORZUGSWEISE TURBOMOLEKULARPUMPE**
PROCESS FOR MONITORING THE OPERATIVE POSITION OF THE ROTARY SYSTEM OF A VACUUM PUMP, ESPECIALLY A TURBO-MOLECULAR PUMP
PROCEDE DE CONTROLE DE LA POSITION DE FONCTIONNEMENT DU SYSTEME ROTATIF D'UNE POMPE A VIDE, DE PREFERENCE UNE POMPE TURBOMOLECULAIRE

(30) Priorität: 21.08.1992 DE 4227663
(43) Veröffentlichungstag der Anmeldung: 07.06.1995
(73) Patentinhaber: Balzers und Leybold Deutschland Holding Aktiengesellschaft, 63450 Hanau (DE)
(72) Erfinder: SCHNEIDER, Helmut, D-5352 Zülpich (DE)
(74) Vertreter: Leineweber, Jürgen, Dipl.-Phys.
(86) Internationale Anmeldenummer: EP9301740
(87) Internationale Veröffentlichungsnummer: WO9404825

(56) Entgegenhaltungen:
- EP-A- 0 414 127
- CH-A- 399 963
- GB-A- 2 064 675
- US-A- 4 584 865
- PATENT ABSTRACTS OF JAPAN vol. 8, no. 90 (M-292)(1527) 25. April 1984 & JP A 59 6 423 (FUJI DENKI SEIZO) 13 January 1984

## Beschreibung

Die Erfindung bezieht sich auf ein Verfahren zur Überprüfung der Betriebsposition des rotierenden Systems einer Vakuumpumpe, vorzugsweise einer Turbomolekularpumpe, welches mittels eines Magnetlagers im Gehäuse der Vakuumpumpe aufgehängt ist. Außerdem bezieht sich die Erfindung auf eine für die Durchführung des Prüfverfahrens geeignete Vakuumpumpe.

Molekular- und Turbomolekularvakuumpumpen werden u.a. in der Halbleiterindustrie eingesetzt und dienen der Evakuierung von Kammern, in denen Plasmaprozesse ablaufen. Beim Ablauf derartiger Prozesse entstehen eine Vielzahl aggressiver Gase, wie z.B. Wasserstoff, Sauerstoff, Halogene, Verbindungen dieser Gase usw., welche elementar, molekular und/oder auch als Radikale vorliegen. Kritisch sind diese Gase vor allem für fett- oder ölgeschmierte Lagerungen. Es ist deshalb erstrebenswert, Vakuumpumpen für diese Einsatzzwecke mit Magnetlagerungen zu betreiben. Passive oder zumindest weitgehend passive, also mit Permanentmagneten ausgerüstete Magnetlagerungen, wie sie beispielsweise aus der EP-A-414 127 bekannt sind, haben sich als besonders vorteilhaft erwiesen.

Zum Stand der Technik gehört auch noch der Inhalt der Druckschriften CH-A-399 963, US-A-45 84 865 und GB-A-20 64 675. Sie offenbaren Vorrichtungen zur Überwachung von Lagern, die während des Betriebs der jeweils offenbarten Maschinen ihre Funktion erfüllen. Berührungen des Rotors oder der Welle während ihrer Rotation mit feststehenden Teilen werden laufend überwacht. Bei Magnetlagerungen für mit hohen Drehzahlen betriebenen Maschinen, wie Turbomolekularvakuumpumpen, dürfen Berührungen dieser Art nicht stattfinden. Die beschriebenen Überwachungseinrichtungen sind für diese Maschinen ungeeignet.

Die Montage von magnetgelagerten Vakuumpumpen ist zeit- und kostenaufwendig, da sie sehr sorgfältig durchgeführt werden muß. Der Grund dafür liegt darin, daß zwischen den rotierenden und festen Bauteilen der Magnetlagerungen relativ kleine Spalte (wenige Zehntelmillimeter) vorhanden sind. Eine weitere Schwierigkeit ist die Montage von Einrichtungen zur Begrenzung der radialen und axialen Abweichungen des rotierenden Systems von der Sollage (Notlauflagereinrichtungen). Diese Einrichtungen sollen verhindern, daß bei Störungen (Erschütterungen, Stöße, Lufteinbrüche usw.) die rotierenden und festen Bauteile sowohl des Magnet lagers als auch der Vakuumpumpe (insbesondere die Schaufeln von Turbomolekularpumpen) einander berühren. Notlauflagereinrichtungen umfassen das unmittelbare Lager, in der Regel ein trockenlaufendes Lager, da Fett- oder Ölschmierungen die Qualität des von der Pumpe erzeugten Vakuum beeinträchtigen würden. Das Lager kann mit der Welle des rotierenden Systems rotieren oder - bei störungsfreiem Betrieb - dem rotierenden System ruhen zugeordnet sein. Zur Notlauflagereinrichtung gehören weiterhin Bauteile, die das Notlauflager tragen. Weitere Bauteile sind mit Kontaktflächen ausgerüstet, die dem Lager zugeordnet sind und davon einen Abstand haben müssen, der der maximal zulässigen Abweichung entspricht.

Der vorliegenden Erfindung liegt die Aufgabe zugrunde, Möglichkeiten zu schaffen, die zum einen die Kontrolle der korrekten Montage einer magnetgelagerten Vakuumpumpe und zum anderen eine einfache Justierung der Bauteile von Notlauflagereinrichtungen zulassen.

Erfindungsgemäß wird diese Aufgabe durch die kennzeichnenden Merkmale der Patentansprüche gelöst.

Zunächst erfolgt die Überprüfung der Betriebsposition mit Hilfe des Stromindikators. Zeigt er einen Stromfluß an, dann berühren sich das rotierende System und das Gehäuse der Vakuumpumpe. Diese Berührungen können auf fehlerhafter (beispielsweise schiefer) Montage von Magnetlagerungen oder auf Verunreinigungen (Späne) beruhen. Der festgestellte Fehler ist dann zu beseitigen. Vorteilhaft an diesem Kontrollverfahren ist, daß es technisch einfach und schnell durchführbar ist. Besonders vorteilhaft ist, daß das erfindungsgemäße Verfahren auch die Justierung von Notlauflagereinrichtungen ermöglicht. Diese Justierung schließt sich dem Schritt der Überprüfung der Betriebsposition des rotierenden Systems an, so daß die jeweilige Notlauflagereinrichtung der korrekten Soll-Lage des rotierenden Systems angepaßt wird.

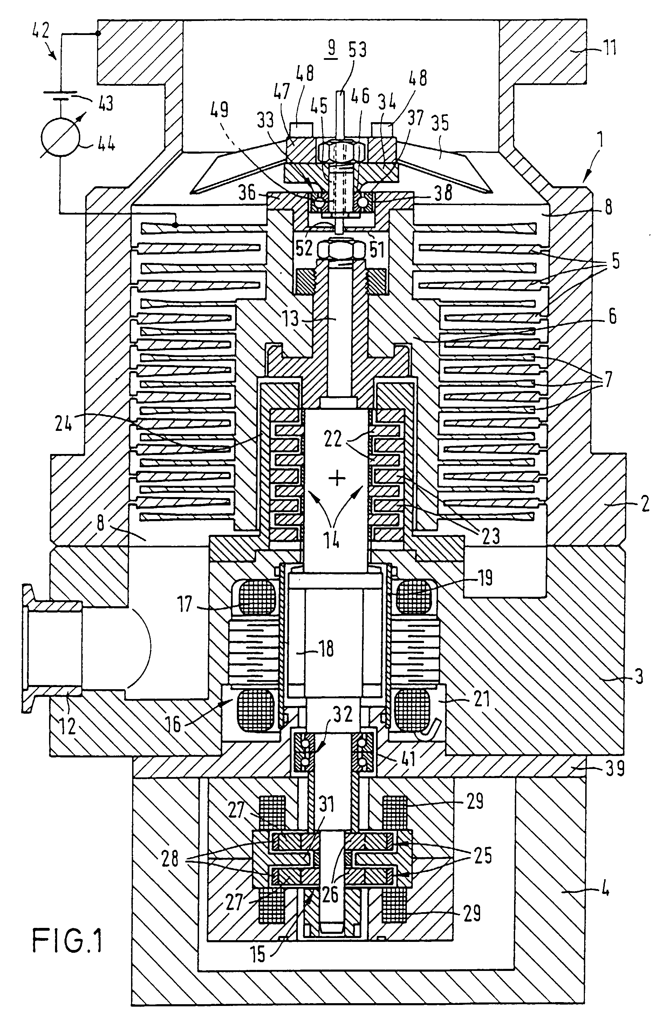

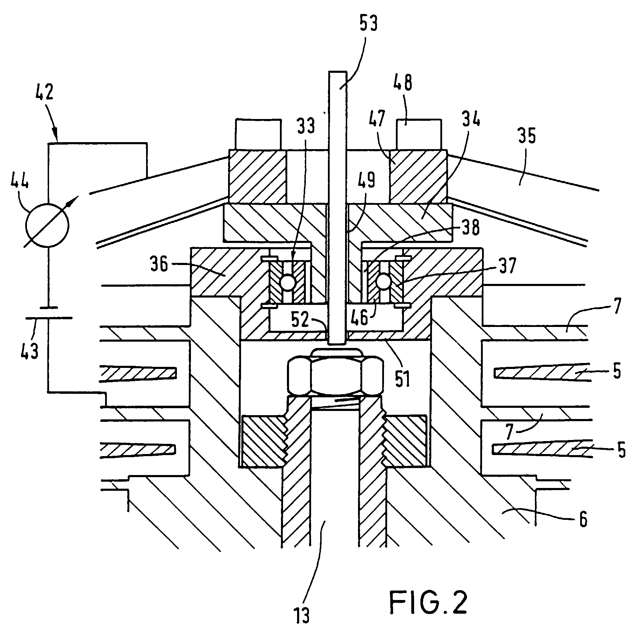

Weitere Vorteile und Einzelheiten der Erfindung sollen anhand von in den Figuren 1 und 2 dargestellten Ausführungsbeispielen erläutert werden. Es zeigen:
- Figur 1 einen Schnitt durch eine vereinfacht darge stellte magnetgelagerte Turbomolekularvakuumpumpe und
- Figur 2 einen Teilschnitt durch eine Pumpe nach Figur 1 mit einer weiteren Ausführungsform einer nach der Erfindung justierbaren Notlauflagereinrichtung.

Die in Figur 1 dargestellte Turbomolekularvakuumpumpe 1 weist die Gehäuseteile 2, 3 und 4 auf. Das Gehäuseteil 2 bildet gleichzeitig den Stator und trägt die Statorschaufeln 5. Die Statorschaufeln 5 und die am Rotor 6 befestigten Rotorschaufeln 7 sind wechselnd in Reihen angeordnet und bilden den ringförmigen Gasförderkanal 8. Der Gasförderkanal 8 verbindet den Einlaß 9 der Pumpe 1, gebildet vom Anschlußflansch 11, mit dem Auslaß 12, an den üblicherweise eine Vorvakuumpumpe angeschlossen ist.

Der Rotor 6 ist auf einer Welle 13 befestigt, die sich ihrerseits über Magnetlagerungen 14 und 15 im Gehäuse der Pumpe 1 abstützt. Zwischen den beiden Magnetlagerungen 14 und 15 befindet sich der Antriebsmotor 16, der von der Spule 17 und dem mit der Welle 13 rotierenden Anker 18 gebildet wird. Der Antriebsmotor 16 ist als Spaltrohrmotor ausgebildet. Das zwischen Spule 17 und Anker 18 angeordnete Spaltrohr ist mit 19 bezeichnet. Die Spule 17 befindet sich in einem vom Spaltrohr und vom Gehäuseteil 3 gebildeten Raum 21, der für die von der Pumpe 1 geförderten Gase nicht zugänglich ist.

Das obere Magnetlager 14 ist als passives Magnetlager ausgebildet. Es besteht aus rotierenden Lagerringen 22, welche auf der Welle 13 befestigt sind, und ortsfesten Lagerringen 23, die von der Hülse 24 umgeben sind.

Das weitere Magnetlager 15 ist teilweise aktiv (in axialer Richtung) und teilweise passiv (in radialer Richtung) ausgebildet. Um dieses zu erreichen, sind auf der Welle 13 Lagerringe 25 befestigt, welche jeweils aus einem Nabenring 26, einem Permanentmagnetring 27 und einem Armierungsring 28 bestehen. Diese Armierungsringe haben die Aufgabe, Zerstörungen der Permanentmagnetringe 27 infolge der hohen Fliehkräfte zu vermeiden.

Den rotierenden Permanentringen 27 sind feststehende Spulen 29 zugeordnet. Diese bilden Magnetfelder, die mit Hilfe des durch die Spulen fließenden Stromes veränderbar sind. Die Änderungen des Spulenstromes erfolgen in Abhängigkeit von Axialsensoren, welche nicht dargestellt sind.

Im Spalt zwischen den mit der Welle rotierenden Lagerringen 25 befindet sich eine feststehende Ringscheibe 31 aus nicht magnetisierbarem Material hoher elektrischer Leitfähigkeit. Dieses Material bewirkt eine Lagerstabilisierung mit wirkungsvoller Wirbelstromdämpfung. Ein dem Magnetlager 15 entsprechendes Lager ist in der europäischen Patentschrift 155 624 offenbart.

Mit 32 und 33 sind Notlauflagereinrichtungen bezeichnet. Das obere Notlauflager 33 ist an einem zentralen Flanschbauteil 34 befestigt, das sich im Einlaßbereich 9 der Pumpe 1 befindet und über Stützen 35 am Gehäuseteil 2 abstützt. Dem Lager 33 ist am Rotor 6 ein topfförmiges Bauteil 36 zugeordnet. Zwischen der Innenwand des Bauteiles 36 und dem Außenring 37 des Lagers 33 ist ein Spalt 38 vorgesehen, so daß diese Bauteile einander nicht berühren, wenn der Rotor seine Soll-Lage hat. Führen größere Erschütterungen zu entsprechend größeren radialen Auslenkungen der Rotordrehachse, dann kommt ein Kontakt zwischen Bauteil 36 und Notlauflager 33 zustande. Der Spalt 38 zwischen Lager 33 und Bauteil 36 ist so bemessen, daß die radialen Auslenkungen auf ein zulässiges Maß begrenzt sind.

Das untere Notlauflager 32, das mit der Welle 13 rotiert, ist dazu bestimmt, auch axiale Abweichungen des Rotors 6 von der Soll-Lage zu verhindern. Dazu ist im Zwischenflansch 39 zwischen den Gehäuseteilen 3 und 4 eine zylindrische Ausnehmung 41 mit radialen Abstufungen vorgesehen, auf die sich der Außenring des Lagers 32 bei übermäßigen axialen Verschiebungen des Rotors 6 (z. B. bei einem Lufteinbruch im Einlaßbereich der Pumpe) aufsetzt.

Die Überprüfung der korrekten Betriebsposition des rotierenden Systems erfolgt folgendermaßen:

Der magnetisch aufgehängte, aber noch nicht vom Antriebsmotor 16 in Drehung versetzte Rotor 6 und das Gehäuse werden derart hintereinander in einen Stromkreis 42 eingeschaltet, daß die zwischen dem rotierenden System und dem Gehäuse bestehenden Abstände ebenfalls Bestandteil des Stromkreises 42 sind. Die Befestigung der zum Stromkreis 42 gehörenden Leitungen am Rotor 6 (z. B. an eine Rotorschaufel 7) und am Gehäuseteil 1 kann z. B. mit Krokodilklemmen durchgeführt werden. Dabei ist eine Abweichungen des Rotors 6 von der Soll-Lage bewirkenden Belastung zu vermeiden.

Im Stromkreis 42 befinden sich außerdem die Stromquelle 43 und der Stromflußindikator 44, z. B. eine Lampe. Ist beispielsweise das Magnetlager 14 nicht gleichmäßig montiert oder befinden sich noch Metallspäne insbesondere im Bereich der Magnetlager, dann kann es zu einer Schieflage des rotierenden Systems oder einer Überbrückung der zwischen den ruhenden und den rotierenden Lagerringen befindlichen Spalte kommen. Die Folge ist, daß ein Strom fließt, der vom Indikator 44 angezeigt wird. In diesem Falle liegt ein Fehler vor, der beseitigt werden muß.

Zeigt der Indikator 44 keinen Stromfluß an, dann ist die Montage fehlerfrei. Das rotierende System, das seine Soll-Lage eingenommen hat, ist berührungsfrei im Gehäuse aufgehängt.

Ein besonderes Problem ist noch die Justierung der oberen Notlauflagereinrichtung 33, 34, 36. Der Grund dafür liegt unter anderem darin, daß die Stützen 35 nachträglich in das Gehäuseteil 2 eingeschweißt werden müssen, so daß eine von Anfang an exakte, mit der Soll-Lage des Rotors 6 fluchtende Befestigung des Flanschbauteiles 34 an den Stützen 35 nicht möglich ist.

Um die Notlauflagereinrichtung 33, 34, 36 exakt justieren zu können, ist es erforderlich, einen Spalt 38 einzustellen, der über seinen Umfang eine im wesentlichen gleiche Stärke hat. Die das obere Notlauf lager bildenden Bauteile sind so ausgebildet, daß sie diese Justierung erlauben.

Das Flanschbauteil 34 weist einen Stutzen auf, an dem das Lager 33 mit Hilfe des Bolzens 45 befestigt ist. Der Lagerinnenring 46 liegt dem Stutzen an und wird vom Bolzenkopf in seiner Lage gehalten. Das Flanschbauteil 34 ist radial verschiebbar mittels der Schrauben 48 an einem Ring 47 befestigt, der von den Stützen 35 getragen wird. Weiterhin ist der Bolzen 45 mit einer Axialbohrung 49 ausgerüstet. Schließlich weist noch der Boden 51 des topfförmigen Bauteiles 36 eine Bohrung 52 auf.

Die Justierung der oberen Notlauflagereinrichtung erfolgt mit Hilfe eines Stiftes 53, der in die Bohrungen 49 und 52 einschiebbar ist. Zwischen dem Stift 53 und der Bohrung 49 besteht eine Schiebepassung, d. h. das Spiel zwischen dem Stift 53 und der Bohrung 49 ist so gering, daß gerade noch eine axiale Verschiebung des Stiftes 53 möglich ist. Die Notlauflagereinrichtung ist dann justiert, wenn die Bohrungen 49 und 52 zueinander eine konzentrische Lage haben. Die Bohrung 52 ist so groß gewählt, daß der Stift 53 mit dieser Bohrung 52 für den Fall, daß er eine zentrische Position eingenommen hat, einen Ringspalt bildet, dessen Größe zwischen 5 und 10 Prozent der maximal zulässigen radialen Rotorauslenkung beträgt. Wird zum Beispiel eine maximale radiale Rotorauslenkung von 0,3 mm zugelassen, dann sollte der von dem Stift 53 und der Bohrung 52 gebildete Ringspalt - bei konzentrischer Lage des Stiftes 53 - etwa 20 bis 30 µ stark sein. Dieses ist beispielsweise der Fall, wenn der Stift 53 einen Durchmesser von 3 mm und die Bohrung 52 einen Durchmesser von 3,05 mm hat.

Die Justage erfolgt in der Weise, daß das Flanschbauteil 34 zunächst klemmend am Ring 47 befestigt wird. Danach wird der Stift 53 durch die Bohrung 49 eingeführt. Liegen die Bohrungen 49 und 52 nicht konzentrisch übereinander, dann wird der Stift 53 den Boden 51 des Bauteiles 36 berühren, so daß dadurch der Stromkreis 42 geschlossen wird. Der Stromflußindikator 44 leuchtet auf. Das Flanschbauteil 34 wird solange - z. B. durch Stöße auf das Bauteil 34 - seitlich verschoben, bis der Stromflußindikator keinen Stromfluß mehr anzeigt. Die Bohrungen 49 und 52 liegen dann konzentrisch übereinander. Die maximale Fehlerquote ist kleiner als 10 Prozent. Danach werden die Schrauben 48 zur festen Halterung des Bauteiles 34 am Ring 47 angezogen und der Stift 53 sowie die den Stromkreis 42 bildenden Mittel entfernt. Die Pumpe 1 kann in Betrieb genommen werden.

Das Ausführungsbeispiel nach Figur 2 entspricht weitgehend dem Ausführungsbeispiel nach Figur 1. Unterschiedlich ist lediglich, daß das Notlauflager 33 am rotierenden Topfbauteil 36 mittels Klemmringen befestigt ist, so daß sich der Spalt 38 zwischen dem Innenring 46 und dem Stutzen des ruhenden Flanschbauteiles 34 befindet. Ein Bolzen 45 ist nicht mehr erforderlich. Die Bohrung 49 befindet sich unmittelbar im Bauteil 34.

Die Justage dieser Notlauflagereinrichtung erfolgt in der Weise, wie es zum Ausführungsbeispiel nach Figur 1 beschrieben wurde. Nach der Justage werden wieder die Schrauben 48 fest angezogen und der Stift 53 sowie die den Stromkreis 42 bildenden Mittel entfernt. Die Pumpe kann in Betrieb genommen werden.

## Patentansprüche

1. Verfahren zur Überprüfung der Betriebsposition des rotierenden Systems einer Vakuumpumpe, vorzugsweise einer Turbomolekulapumpe, welches mittels eines Magnetlagers (14, 15) im Gehäuse (1) der Vakuumpumpe aufgehängt ist, dadurch gekennzeichnet, daß die Überprüfung vorgenommen wird, nachdem das rotierende System in den Magnetlagern aufgehängt wurde und bevor es in Drehung versetzt wird, daß zur Durchführung der Überprüfung der Rotor (6) und das Gehäuse (1) in einen Stromkreis (42) eingeschaltet werden, in dem sich neben einer Stromquelle (43) ein Stromflußindikator (44) befindet, daß das Prüfungsergebnis mit Hilfe des Stromflußindikators (44) festgestellt wird und daß sich an die Überprüfung der Betriebsposition des rotierenden Systems die Justierung einer Notlauflagereinrichtung (33, 34, 36) mit Hilfe des Stromkreises (42) anschließt.

2. Verfahren nach Anspruch 1, dadurch gekennzeichnet, daß sich bei einer im Bereich der Stirnseite des rotierenden System angeordneten Notlauflagereinrichtung, welche das Notlauflager (33), ein gehäusefestes Bauteil (34) und ein rotierendes Bauteil (36) umfaßt, die Konzentrizität des Spaltes (38) zwischen den gehäusefesten und den rotierenden Bauteilen durch Verschieben des gehäusefesten Bauteiles (34) eingestellt wird.

3. Verfahren nach Anspruch 2, dadurch gekennzeichnet, daß die Justierung der Notlauflagereinrichtung (33, 34, 36) mit Hilfe von Bohrungen (49, 52) im gehäusefesten Bauteil (34) und im rotierenden Bauteil (36) sowie mit Hilfe eines Justierstiftes (53) vorgenommen wird.

4. Für die Durchführung des Verfahrens nach einem der vorhergehenden Ansprüche geeignete Vakuumpumpe, vorzugsweise Turbomolekularvakuumpumpe mit einem rotierenden System, das mittels eines Magnetlagers (14, 15) im Gehäuse (1) der Vakuumpumpe aufgehängt ist, dadurch gekennzeichnet, daß Mittel zur Bildung eines Stromkreises (42) mit einer Stromquelle (43) und einem Stromflußindikator (44) vorhanden sind, in welchen der Rotor (6) und das Gehäuse (1) derart hintereinander einschaltbar sind, daß die zwischen dem rotierenden System und dem Gehäuse bestehenden Abstände Bestandteil dieses Stromkreises (42) sind, daß zur Durchführung der Justierung eine stirnseitig im Bereich des Rotors angeordnete Notlauflagereinrichtung (33, 34, 36) vorhanden ist, die ein gehäusefestes Flanschbauteil (34) und ein rotierendes Topfbauteil (36) aufweist, zwischen denen das Lager (33) angeordnet ist, daß Flanschbauteil (34) und Topfbauteil (36) zentrale Bohrungen (49, 52) aufweisen, die zur Justierung der Notlauflagereinrichtungen an die Soll-Lage des rotierenden Systems in eine zueinander fluchtende Stellung gebracht werden müssen, und daß ein Justierstift (53) vorgesehen ist, der in die Bohrung (49) des Flanschbauteiles (34) mittels Schiebepassung einführbar ist.

5. Pumpe nach Anspruch 4, dadurch gekennzeichnet, daß das Flanschbauteil (34) einen Stutzen aufweist, der in das Topfbauteil (36) hineinragt.

6. Pumpe nach Anspruch 5, dadurch gekennzeichnet, daß das Lager (33) am Stutzen des Flanschbauteiles (34) - beispielsweise mit Hilfe eines Bolzens (45) - befestigt ist.

7. Pumpe nach Anspruch 5, dadurch gekennzeichnet, daß das Lager (33) am Topfbauteil (36) befestigt ist und den Stutzen des Flanschbauteils (34) umfaßt.

8. Pumpe nach einem der Ansprüche 4 bis 7, dadurch gekennzeichnet, daß der Durchmesser der Bophrung (52) im Topfbauteil (36)) um etwa 10 bis 20 Prozent größer ist als der Durchmesser der Bohrung (49) im Flanschbauteil (34).

## Claims

1. Process for checking the operating position of the rotating system of a vacuum pump, preferably a turbo-molecular pump, said system being suspended within the casing (1) of the vacuum pump by means of a magnetic bearing (14, 15), characterised in that the checking operation is effected following suspension of the rotating system in the magnetic bearings and prior to rotation of said system, in that, with a view to effecting said checking operation, the rotor (6) and the casing (1) are connected to a current circuit (42) comprising in addition to a current source (43) a current-flow indicator (44), in that the result of the checking operation is determined with the aid of the current-flow indicator (44) and in that the operation of checking the operating position of the rotating system is followed by adjusting, with the aid of the current circuit (42), a bearing assembly (33, 34, 36) for emergency operation.

2. Process according to Claim 1, characterised in that in a bearing assembly for emergency operation arranged near the front end of the rotating system, whereby said bearing assembly comprises the bearing (33) for emergency operation, a component (34) which is firmly secured to the casing and a rotating component (36), the concentricity of the gap (38) between the component which is firmly secured to the casing and the rotating component is adjusted by displacing the component (34) which is firmly secured to the casing.

3. Process according to Claim 2, characterised in that the adjustment of the bearing assembly (33, 34, 36) for emergency operation is effected with the aid of boreholes (49, 52) in the component (34) which is firmly secured to the casing and in the rotating component (36) as well as with the aid of an adjusting pin (53).

4. A vacuum pump suitable for carrying out the process according to one of the preceding claims, preferably a turbo-molecular vacuum pump with a rotating system suspended in the casing (1) of the vacuum pump with the aid of a magnetic bearing (14, 15), characterised in that means are provided for producing a current circuit (42) having a current source (43) and a current-flow indicator (44), to which the rotor (6) and the casing (1) can be connected in tandem in such a manner as to ensure that the gaps between the rotating system and the casing form part of said current circuit (42), in that, with a view to effecting the adjustment, a bearing assembly (33, 34, 36) for emergency operation is provided, said bearing assembly being arranged at the front end in the region of the rotor and comprising a flange component (34) which is firmly secured to the casing and a rotating pot-type component (36) whereby the bearing (33) is arranged between said components, in that the flange component (34) and the pot-type component (36) comprise central boreholes (49, 52) which, with a view to adjusting the bearing assemblies for emergency operation to the required position of the rotating system, must be aligned in respect of one another, and in that an adjusting pin (53) is provided which can be introduced by way of a sliding fit into the borehole (49) of the flange component (34).

5. Pump according to Claim 4, characterised in that the flange component (34) comprises a socket which protrudes into the pot-type component (36).

6. Pump according to Claim 5, characterised in that the bearing (33) is secured to the socket of the flange component (34) - for instance with the aid of a bolt (45).

7. Pump according to Claim 5, characterised in that the bearing (33) is secured to the pot-type component (36) and comprises the socket of the flange component (34).

8. Pump according to one of Claims 4 to 7, characterised in that the diameter of the borehole (52) in the pot-type component (36) is approximately 10 to 20 percent larger than the diameter of the borehole (49) in the flange component (34).

## Revendications

1. Procédé pour vérifier la position de service d'un système en rotation d'une pompe à vide, de préférence d'une pompe turbo-moléculaire, laquelle est suspendue dans le boîtier (1) de la pompe à vide au moyen d'un palier magnétique (14, 15), caractérisé en ce que l'on procède à la vérification après avoir suspendu le système en rotation dans les paliers magnétiques et avant de le mettre en rotation, en ce que pour exécuter la vérification on branche le rotor (6) et le boîtier (1) dans un circuit électrique (42), dans lequel on trouve outre une source de courant (43), un indicateur d'écoulement de courant (44), en ce que l'on détermine le résultat de la vérification à l'aide de l'indicateur d'écoulement de courant (44), et en ce que l'on procède, à la suite de la vérification de la position de service du système en rotation, à l'ajustement de dispositifs à palier de secours (33, 34, 36) à l'aide du circuit électrique (42).

2. Procédé selon la revendication 1, caractérisé en ce que, dans le cas d'un dispositif à palier de secours agencé dans la région de la face frontale du système en rotation, lequel dispositif comporte le palier de secours (33), un composant (34) solidaire du boîtier, et un composant en rotation (36), on règle la concentricité de la fente (38) entre le composant solidaire du boîtier et le composant en rotation par déplacement du composant solidaire du boîtier (34).

3. Procédé selon la revendication 2, caractérisé en ce que l'ajustement du dispositif de palier de secours (33, 34, 36) est effectué au moyen de perçages (49, 52) dans le composant solidaire du boîtier (34) et dans le composant en rotation (36), ainsi qu'au moyen d'une tige d'ajustement (53).

4. Pompe à vide propre à la mise en oeuvre du procédé selon l'une des revendications précédentes, de préférence pompe à vide turbo-moléculaire comprenant un système en rotation, qui est suspendu dans le boîtier (1) de la pompe à vide au moyen d'un palier magnétique (14, 15), caractérisé en ce qu'il est prévu des moyens pour former un circuit électrique (42) avec une source de courant (43) et un indicateur d'écoulement de courant (44), dans lequel le rotor (6) et le boîtier (1) peuvent être branchés l'un derrière l'autre de telle manière que les intervalles existant entre le système en rotation et le boîtier font partie intégrante de ce circuit électrique (42), en ce que pour l'exécution de l'ajustement, il est prévu un dispositif de palier de secours (33, 34, 36) agencé du côté frontal dans la région du rotor, lequel dispositif comprend un composant de bride solidaire du boîtier (34) et un composant en rotation en forme de godet (36), entre lesquels est agencé le palier (33), en ce que le composant de bride (34) et le composant de godet (36) présentent des perçages centraux (49, 52) qui doivent être amenés en position d'alignement mutuel pour l'ajustement des dispositifs de palier de secours à la position de consigne du système en rotation, et en ce qu'il est prévu une tige d'ajustement (53), susceptible d'être introduite d'une manière ajustée dans le perçage (49) du composant de bride (34).

5. Pompe selon la revendication 4, caractérisée en ce que le composant de bride (34) comporte un manchon qui pénètre dans le composant de godet (36).

6. Pompe selon la revendication 5, caractérisée en ce que le palier (33) est fixé sur le manchon du composant de bride (34), par exemple au moyen d'un goujon (45).

7. Pompe selon la revendication 5, caractérisée en ce que le palier (33) est fixé sur le composant en godet (36), et entoure le manchon du composant de bride (34).

8. Pompe selon l'une quelconque des revendications 4 à 7, caractérisée en ce que le diamètre du perçage (52) dans le composant en godet (36) est supérieur d'environ 10 à 20% au diamètre du perçage (49) dans le composant de bride (34).
